# EUROPEAN PATENT APPLICATION

(11) **EP 1 187 021 A2**
(43) Date of publication of application: **13.03.2002**
(21) Application number: 01307514.8
(22) Date of filing: 04.09.2001
(51) Int. Cl.: G06F 9/50, H04L 29/06

(54) **Method and system for allocating processing time between two processors**

(30) Priority: 06.09.2000 US 656385
(71) Applicant: ILLINOIS TOOL WORKS INC., Glenview, Illinois 60025 (US)
(72) Inventor: Beiermann, Bradley S., Libertyville, Illinois 60048 (US); Francke, Richard C., Bartlett Lakes, Illinois 60103 (US)
(74) Representative: Finnie, Peter John

(57) **Abstract**

An appliance (10) having an embedded controller (20) with a processor (22), a network gateway interface device (28) coupled to the embedded controller, an operating program segment stored in a memory (24) of the embedded controller (20), a gateway communication program segment stored at least partially in the memory (24) of the embedded controller (20), and a resource sharing program segment stored in the memory (24) of the embedded controller (20). The resource sharing program segment allocates processing time of the processor (22) between the gateway communication program segment and the operating program segment. The appliance (10) may be monitored, controlled, accessed and updated with software over a network from a remote user interface, embodied for example on an Internet browser.

## Description

The invention relates generally to appliances, and more particularly to processor based, network enabled appliances and systems therefor.

An object of the present invention is to provide novel appliances and systems therefor that overcome problems in and improve upon the prior art.

Another object of the invention is to provide in some embodiments thereof novel appliances and systems therefor that are economical.

Another object of the invention is to provide in some embodiments thereof novel appliances having processor based embedded controllers that are network enabled.

A further object of the invention is to provide in some embodiments thereof novel network enabled appliances, particularly those having relatively low processing capacity processors and limited memory resources.

Another object of the invention is to provide in some embodiments thereof novel processor based networked enabled appliances having a resource sharing program segment stored in a memory thereof to allocate processing time between an appliance operating program and a communications program executed by the processor.

Another object of the invention is to provide in some embodiments thereof novel networked appliance systems having remote user interfaces, for example virtual software control panels embodied on Internet browsers, for interfacing with an appliance over a network, for example the Internet.

A further object of the invention is to provide in some embodiments thereof novel appliances having embedded controllers that are controllable remotely over communications networks with a remote user interface device having a virtual control panel, corresponding at least in part to controls on the actual appliance, for example user controls accessible from a control panel of the appliance.

Yet another object of the invention is to provide in some embodiments thereof novel appliances that are remotely programmable from a remote user interface over a communications network, for example transferring and installing supplemental and/or updated software segments and/or firm ware on the appliance.

A further object of the invention is to provide in some embodiments thereof novel appliances that may be monitored and/or interrogated from a remote user interface over a communications network.

A more particular object of the invention is to provide in some embodiments thereof novel network enabled appliances comprising an embedded controller having a processor and memory, preferably a relatively low processing capacity processor, a network gateway interface device coupled to the embedded controller, an appliance operating program segment stored in a memory portion of the embedded controller, a gateway communication program segment stored at least partially in a memory portion of the embedded controller, and a resource sharing program segment stored in a memory portion of the embedded controller, whereby the resource sharing program segment allocates processing time of the processor between the gateway communication program segment and the appliance operating program segment.

Another more particular object of the invention is to provide in some embodiments thereof novel appliance systems comprising an appliance having a processor based embedded controller with memory, preferably a relatively low processing capacity processor, input devices coupled to the embedded controller, processor controlled output devices coupled to the embedded controller, a gateway interface device coupled to the embedded controller, an operating program segment stored in a memory portion of the embedded controller, a gateway communication program segment stored at least partially in a memory portion of the embedded controller, a resource sharing program segment stored in a memory portion of the embedded controller, the resource sharing program segment allocating processing time of the processor between the gateway communication program segment and the operating program segment, and a network gateway coupled to the gateway interface device of the embedded controller.

Yet another more particular object of the invention is to provide in some embodiments thereof novel methods for network enabled appliances having processor based embedded controllers, comprising communicating between a remote user interface and a network gateway over a network using a network communication protocol, communicating between the network gateway and the appliance over a gateway communications link using a gateway communication protocol different from the network communication protocol, and bridging communications between the network and the gateway communication link with a gateway bridge program.

Still another more particular object of the invention is to provide in some embodiments thereof novel methods for appliance control and monitoring systems, the appliance having a processor based embedded controller with memory, preferably a relatively low processing capacity processor, the method comprising enabling the appliance to communicate over a network, for example the Internet, by establishing a network communication link between the appliance and the network, communicating with the appliance over the network from a remote user interface embodied as a virtual control panel, for example on an Internet browser, and monitoring operational parameters of the appliance from the remote user interface.

Another more particular object of the invention is to provide in some embodiments thereof novel methods for software reconfiguration of an appliance over a network, the appliance having a processor based embedded controller with memory and an appliance operating program segment stored therein, the method comprising enabling the appliance to communicate over the network by establishing a network communication link between the appliance and the network, communicating with the appliance over the network from a remote user interface embodied as a virtual control panel on an Internet browser, and transferring software over the network from the remote user interface to a memory portion of the embedded controller.

A particular embodiment will now be described with reference to the accompanying drawings, in which:-
FIG. 1 is an appliance with a processor based embedded controller according to an exemplary embodiment of the invention;
FIG. 2 is a networked appliance system; and,
FIG. 3 is a resource sharing program segment.

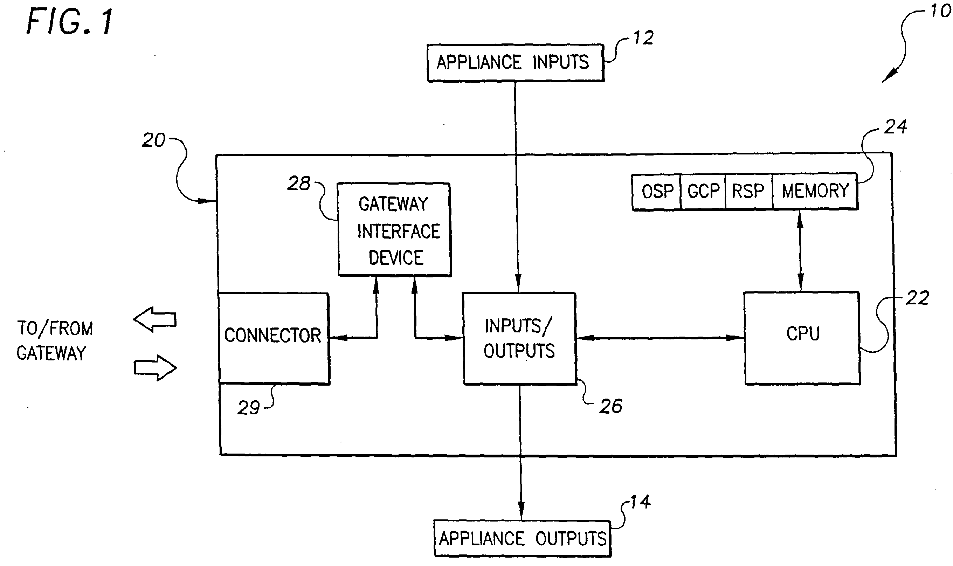

FIG. 1 illustrates an exemplary appliance 10 comprising a processor based embedded controller 20 having a microprocessor (CPU) 22, also referred to herein as a processor, and memory 24 associated therewith, for controlling the operation of the appliance.

The memory of the exemplary embodiment is a schematic representation of various forms of memory typical of processor based embedded controllers, including for example ROM, RAM and EPROMS, among others, as is known to those having ordinary skill in the art.

Processors having limited processing capacity, for example, 4, 8 and 16 bit processors are generally suitable for use in most embodiments of the present invention, and are particularly desirable for their low cost. In other embodiments, however, other higher capacity processors may be used, for example 32 bit devices, and thus the invention is not limited to embedded controllers having low processing capacity processors.

The appliance 10 comprises appliance input devices 12 coupled to an input of the embedded controller, and processor controlled appliance output devices 14 coupled to an output thereof. The appliance inputs and outputs are generally coupled to the processor 22 by one or more input/output interface devices, illustrated schematically at 26, which may provide buffering and/or multiplexing of signals communicated to and from the processor.

The appliance may, for example, be a consumer refrigerator or commercial refrigeration system, a washing machine, a vending machine, a water softener, or some other consumer or commercial appliance having a processor based embedded controller.

The input devices 12 of the exemplary appliance correspond generally to appliance inputs and controls, some of which may be controllable by a user from a control panel of the appliance, whereas others are derived from controls and sensors on the appliance.

Exemplary appliance inputs include, for example, ON/OFF controls, system configuration settings, temperature controls, water softness and/or turbidity controls, pressure controls, fluid system configuration settings, ON/OFF controls, among many others, depending on the particular appliance, as is known generally by those having ordinary skill in the art.

The appliance and particularly the embedded controller thereof also comprises an appliance operating software program segment (OSP) stored in the memory 24 for execution by the processor. The OSP controls operation of the appliance generally, for example by controlling the appliance outputs 14 based on signals at the appliance inputs 12 in accordance with pre-programmed instructions of the OSP.

In one embodiment of the invention, the appliance comprises a network gateway interface device 28 coupled to the embedded controller, and particularly to the processor 22 thereof, either directly or via the input/output interface device 26, depending on the configuration of the embedded controller. The gateway interface device 28 generally permits communication between the embedded controller and a network gateway, as discussed more fully below.

In the exemplary embodiment, the gateway interface device 28 is a universal asynchronous receiver transmitter (UART) coupled to an RS232 configured cable connector 29 for a hard-wire communication link between the appliance and the network gateway. In other embodiments, however, the interface device 28 and connector 29 may be configured for other hard-wire protocols, which are well known to those having ordinary skill in the art.

The gateway interface device 28 and connector 29 are illustrated as discrete components, but in some other embodiments they may be integrated on or as a single device. Alternatively, the interface device 28 may be a wireless communication device, for example an RF or JR transmitter/receiver, thus obviating the requirement for a cable connector.

The appliance also comprises a gateway communication program segment (GCP) stored at least partially in the memory 24 of the embedded controller for execution by the processor 22. The gateway communication program segment enables communication between the embedded controller and the network gateway, via the gateway interface device.

The gateway communication program segment includes a gateway communication protocol, preferably a lightweight network protocol that does not require substantial memory resources and processing capacity.

In one embodiment, the gateway communication program segment is em NET, which is part of the EMIT Device Internetworking Software, by em WARE, Salt Lake City, Utah, USA. In other embodiments, however, other protocols may be used including for example, CAN, Device Net, Ethernet, RS-232, RS-485 and WAP, among others.

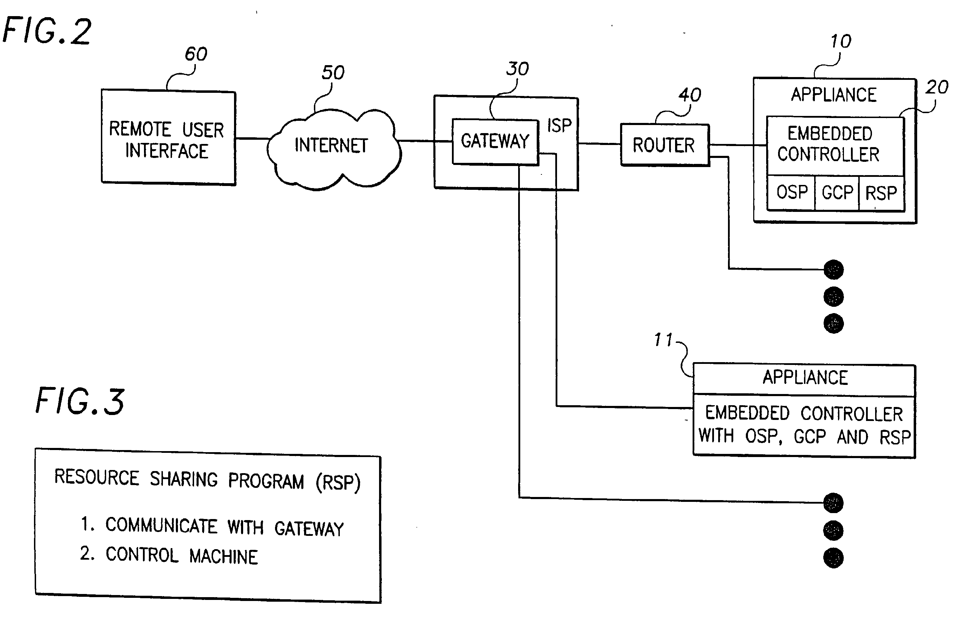

In some embodiments, for example in appliances having relatively low processing capacity and/or limited memory resources, the embedded controller comprises a resource sharing program segment (RSP) stored in the memory thereof The resource sharing program segment allocates processing time between the gateway communication program segment (GCP) and the appliance operating program segment (OSP), as illustrated in FIG. 3, for example by round-robin scheduling or some other resource management routine.

In one embodiment, the resource sharing program segment (RSP) is em MICRO, which is part of the EMIT Device Internetworking Software, by em WARE, Salt Lake City, Utah, USA, although other equivalent programs may be used alternatively.

The resource sharing program segment (RSP) enables appliances having relatively limited processing capacity and/or limited memory resources to more effectively operate both the appliance operating program segment (OSP) and the network gateway communication segment (GCP).

The resource sharing program segment (RSP) may be required in some embodiments, depend on the processing capacity and memory resources of the embedded controller. In some embodiments, for example where the processor has substantial processing capacity and memory resources, the resource sharing program segment (RSP) may not be required, but may still be used.

The resource sharing program segment (RSP) is particularly desirable in applications where the embedded controller has limited memory and the processor has limited processing capacity, for example in applications having 4 and 8 bit processors and in some applications having 16 bit processors.

In FIG. 2, the embedded controller is coupled to a network gateway 30 by a gateway communications link controlled by the gateway communication program, a portion of which may be stored on the network gateway, as discussed above. In the exemplary embodiment, the network gateway is an Internet service provider (ISP) coupled to the appliance, and particularly to the interface device of the embedded controller thereof In other embodiments, the network gateway may be a server/PC.

The network gateway 30 is coupled to a communication network 50 having a network communication protocol, for example an open network protocol like the Internet protocol, TCP/IP. In other embodiments, however, the appliance is coupled to a closed network, for example a wide area network (WAN), having some other commercially available or proprietary communication protocol.

The gateway communication protocol is generally different from, and in embodiments where the appliance has limited processing capacity preferably less complex than, the network communication protocol, which may be incapable of efficient execution by processors having limited processing capacity and memory, as discussed.

The network gateway directs communications received over the network 50 to the appropriate appliance coupled thereto via the gateway communications link. And in embodiments where the network and gateway communication protocols are different, the gateway bridge program segment bridges communications between the network communication protocol and the gateway communication protocol.

In one embodiment, the gateway bridge program segment is em GATEWAY, which is part of the EMIT Device Internetworking Software, by em WARE, Salt Lake City, Utah, USA, although other equivalent programs may be used alternatively.

In other embodiments, the gateway communication protocol is the same as the network communication protocol, for example where the processor is capable of processing more complex communication protocols, like TCP/IP or others. The resource sharing program segment (RSP) may also be used in these embodiments to allocate processing time of the processor, but may not be required.

In FIG. 2, the appliance 10 is coupled to the ISP by a router 40. Generally, a plurality of appliances may be coupled to the network gateway 50, or Internet service provider, with or without the router 40, as illustrated schematically. The router operates as a polling device in embodiments where a plurality of appliances are coupled thereto.

FIG. 2 illustrates another appliance 11 having an embedded controller, which is configured generally the same as the embedded controller 20 of FIG. 1, with an operating program segment (OSP), a gateway communication program segment (GCP), and a resource sharing program segment (RSP) coupled directly to the network gateway. More generally, a plurality of appliances may be coupled to the ISP or directly to the gateway 30, as illustrated schematically.

The one or more appliances coupled to the network gateway generally have a unique network address assigned thereto for communications to and from the network 50 via the network gateway 30. In embodiments where the network is the Internet, the appliances may each have a unique Internet address.

The network gateway and particularly the gateway bridge program segment directs communications received over the network 50 to the appropriate appliance coupled thereto via the gateway communications link where the network and gateway communication protocols are different.

FIG. 2 illustrates a remote user interface device 60 coupled to the network gateway 30 by the network 50 for remotely communicating with the one or more appliances coupled to the network gateway. The device 60 may be a personal computer (PC) connected to the network 50 or a personal digital assistant (PDA) or some other network enabled communication device.

Appliances coupled to a network, as illustrated in the exemplary schematic of FIG. 2, may be operated and/or controlled and/or monitored and/or accessed and/or updated or reconfigured with software from the remote user interface via the network.

The remote user interface device is preferably a virtual software panel, for example one embodied on an Internet browser operating an object oriented programming language such as JAVA or PERL, but in alternative embodiments may take other forms.

In some applications, the remote user interface is configured for remote operation of the appliance. For this purpose, the remote user interface may duplicate in whole or in part, for example in virtual form, controls on the control panel of the actual appliance, as well as other controls not accessible to the end user, thus permitting real time control or operation of the appliance from the remote user interface via the network.

In other applications, the appliance may be interrogated from the remote user interface. In some applications, for example, it is desirable to monitor various operational parameters of the appliance, e.g. temperature, pressure, cycle time, among other parameters known to those having ordinary skill in the art, in real time. It may also be desirable to access, and in some instance to download, historical operational data previously sampled and stored in a portion of memory on the embedded controller.

One exemplary application is the remote monitoring of temperatures or accessing historical temperature data stored on refrigeration systems in the food industry to ensure proper food storage temperatures. These and other remote appliance monitoring and interrogation schemes may be implemented, for example, to ensure the quality of goods and services of third parties pursuant to franchise agreements or for other supervisory purposes. Another exemplary application is the monitoring of appliance operation and interrogation of data stored thereon from the remote user interface for service and problem solving purposes, thereby eliminating the need, at least initially, for on-site service calls. Besides remotely monitoring appliance operation and accessing data stored thereon, the appliance may also be subject to remotely administered operational testing, for example by cycling the appliance through various modes of operation to identify problems. These and other remotely administered schemes may be implemented by manufacturers as part of a product warranty and/or service program.

In other applications, supplemental or updated firmware or software may be transferred onto the appliance, and particularly onto the memory of the embedded controller thereof, from the remote user interface via the network. The software update or reconfiguration may be performed for example, by the manufacturer or a third party from an off-site location, thereby eliminating the requirement for manually installing updated software distributed on hardcopy formats like floppy diskettes or CD-rom diskettes and/or updating hardware components, for example circuit boards or board level memory devices having the new firmware.

Some other appliances require a unique software configuration depending, for example, on the operational environment or geographical region in which the appliance is ultimately used. This software may be updated or transferred onto the appliance from a remote user interface by the manufacturer, thereby eliminating the need for storing a plurality of different software segments or programs on the appliance at the time of manufacture.

## Claims

1. An appliance (10), comprising:
an embedded controller (20) having a processor (22) and memory (24);
a network gateway interface device (28) coupled to the embedded controller (20);
an appliance operating program segment (OSP) stored in a memory portion of the embedded controller;
a gateway communication program segment (GCP) stored at least partially in a memory portion of the embedded controller; and
a resource sharing program segment (RSP) stored in a memory portion of the embedded controller,
whereby the resource sharing program segment (RSP) allocates processing time of the processor (22) between the gateway communication program (GCP) segment and the appliance operating program (OSP) segment.

2. An appliance according to claim 1, in which the gateway communication program segment includes a gateway communication protocol.

3. An appliance according to claim 1 or claim 2, comprising appliance input devices (12) coupled to an input (26) of the embedded controller, and processor controlled appliance output devices (14) coupled to an output (26) of the embedded controller.

4. An appliance according to any preceding claim, having a network address associated with the appliance.

5. An appliance system comprising:
an appliance (10) having a processor based embedded controller (22) with memory (24), input devices (12) coupled to the embedded controller, processor controlled output devices (14) coupled to the embedded controller, and a gateway interface device (28) coupled to the embedded controller;
an appliance operating program segment stored in a memory portion of the embedded controller;
a gateway communication program segment stored at least partially in a memory portion of the embedded controller;
a resource sharing program segment stored in a memory portion of the embedded controller, the resource sharing program segment allocating processing time of the processor (22) between the network communication program segment and the appliance operating program segment; and,
a network gateway (30) coupled to the gateway interface device (28) of the embedded controller.

6. An appliance system according to claim 5, in which the network gateway (30) is coupled to a network having a network communication protocol, the gateway communication program segment including a gateway communication protocol different from the network communication protocol, and in which a gateway bridge program segment is stored on the network gateway.

7. An appliance system according to claim 5 or 6, in which the processor is not greater than a 16 bit device.

8. An appliance system according to any of claims 5 to 7, having a network address assigned to the appliance.

9. An appliance system according to any of claims 5 to 8, comprising a remote interface device coupled to the network.

10. An appliance system according to claim 9, in which the remote interface device is a virtual software control panel.

11. An appliance system according to claim 9, in which the network protocol is TCP/IP.

12. An appliance system according to any of claims 5 to 11, in which the remote interface device is a virtual software control panel embodied on an Internet browser.

13. An appliance system according to any of claims 5 to 12, in which the network gateway is an Internet service provider.

14. An appliance system according to claim 13, comprising a routing device (40) interconnecting the gateway interface device of the appliance to the Internet service provider.

15. A method for an appliance having a processor based embedded controller remotely accessible over a network, comprising:
communicating between a remote user interface and a network gateway over the network using a network communication protocol;
communicating between the network gateway and the appliance over a gateway communications link using a gateway communication protocol different from the network communication protocol; and,
bridging communications between the network and the gateway communication link with a gateway bridge program.

16. A method according to claim 16, comprising operating the appliance with an appliance operating program segment stored in a memory portion of the embedded controller, implementing the gateway communication protocol with a gateway communication program segment stored in a memory portion of the embedded controller, allocating processing time of the processor on the embedded controller between execution of the appliance operating program segment and the gateway communication program segment and with a resource sharing program segment stored in a memory portion of the embedded controller.

17. A method according to claim 16, comprising storing appliance operational data in a memory portion of the embedded controller, and remotely accessing the stored appliance operational data from the remote user interface.

18. A method according to claim 16 or 17, comprising monitoring appliance operation in real time from the remote user interface.

19. A method according to any of claims 16 to 18, comprising transferring software from the remote user interface onto the appliance.

20. A method according to any of claims 16 to 18, comprising operating the appliance from the remote user interface.

21. A method for an appliance quality control monitoring system, the appliance having a processor based embedded controller with memory, the method comprising:
enabling the appliance to communicate over a network by establishing a network communication link between the appliance and the network;
communicating with the appliance from a remote user interface embodied as a virtual control panel on an Internet browser over the network;
monitoring operational parameters of the appliance from the remote user interface.

22. A method according to claim 21, comprising sampling and storing operational data of the appliance in a memory portion of the embedded controller, accessing the operational data stored in the memory portion of the embedded controller from the remote user interface.

23. A method of claim 21 or 22, comprising monitoring operational parameters of the appliance in real time from the remote user interface.

24. A method according to any of claims 21 to 23, comprising communicating between the remote user interface and a network gateway over the network using a TCP/IP network communication protocol, communicating between the network gateway and the appliance over a gateway communications link using a gateway communication protocol different from the TCP/IP network communication protocol, bridging communications between the network and the gateway communication link with a gateway bridge program.

25. A method according to claim 24, comprising operating the appliance with an appliance operating program segment stored in a memory portion of the embedded controller, implementing the gateway communication protocol with a gateway communication segment stored in a memory portion of the embedded controller, allocating processing time of the processor on the embedded controller between execution of the appliance operating program segment and the gateway communication program segment and with a resource sharing program segment stored in a memory portion of the embedded controller.

26. A method for appliance software reconfiguration, the appliance having a processor based embedded controller with memory and an appliance operating program segment stored therein, the method comprising:
enabling the appliance to communicate over a network by establishing a network communication link between the appliance and the network;
communicating with the appliance over the network from a remote user interface embodied as a virtual control panel on an Internet browser;
transferring software over the network from the remote user interface to a memory portion of the embedded controller.

27. A method according to claim 26, comprising communicating between the remote user interface and a network gateway over the network using a TCP/IP network communication protocol, communicating between the network gateway and the appliance over a gateway communications link using a gateway communication protocol different from the TCP/IP network communication protocol, bridging communications between the network and the gateway communication link with a gateway bridge program.

28. A method according to claim 27, comprising implementing the gateway communication protocol with a gateway communication segment stored in a memory portion of the embedded controller, allocating processing time of the processor on the embedded controller between execution of the appliance operating program segment and the gateway communication program segment and with a resource sharing program segment stored in a memory portion of the embedded controller.
